# EUROPÄISCHE PATENTSCHRIFT

(11) **EP 3 983 691 B1**
(45) Veröffentlichungstag und Bekanntmachung des Hinweises auf die Patenterteilung: **22.11.2023**
(21) Anmeldenummer: 20732104.3
(22) Anmeldetag: 03.06.2020
(51) Int. Cl.: F16D 3/72, H02K 7/116, F16D 1/08

(54) **GETRIEBEMOTOR, AUFWEISEND EIN GETRIEBE, EINEN ELEKTROMOTOR EINEN ADAPTER UND EINE BALGKUPPLUNG**
GEAR MOTOR COMPRISING A GEAR, AN ELECTRIC MOTOR, AN ADAPTER AND A BELLOWS COUPLING
MOTORÉDUCTEUR COMPRENANT UN ENGRENAGE, UN MOTEUR ÉLECTRIQUE, UN ADAPTATEUR ET UN SOUFFLET DE ACCOUPLEMENT

(30) Priorität: 11.06.2019 DE 102019004056
(43) Veröffentlichungstag der Anmeldung: 20.04.2022
(73) Patentinhaber: SEW-EURODRIVE GmbH & Co. KG, 76646 Bruchsal (DE)
(72) Erfinder: WÖPPERMANN, Markus, 76307 Karlsbad (DE); SCHILLINGER, Jens, 76437 Rastatt (DE); HANNET, Stefan, 68723 Schwetzingen (DE)
(86) Internationale Anmeldenummer: PCT/EP2020/025258
(87) Internationale Veröffentlichungsnummer: WO 2020/249255

(56) Entgegenhaltungen:
- EP-A2- 1 696 145
- WO-A1-2019/214845
- DE-A1- 3 543 915
- DE-A1- 10 118 562
- DE-A1- 10 312 941
- DE-A1-102013 011 900
- DE-C1- 19 846 235

## Beschreibung

Die Erfindung betrifft einen Getriebemotor, aufweisend ein Getriebe, einen Elektromotor und einen Adapter.

Es ist allgemein bekannt, dass ein Getriebemotor, aufweisend ein Getriebe, einen Elektromotor und einen Adapter, beim Betrieb veränderlichen Temperaturen ausgesetzt ist.

Aus der DE 103 12 941 A1 ist ein Metallbalg als Kupplung bei einem Getriebemotor bekannt.

**Aus der** EP 1 696 145 A2 **ist als nächstliegender Stand der Technik ein Getriebemotor bekannt.**

**Aus der** DE 35 43 915 A1 **ist ein Antriebsaggregat für Kraftfahrzeuge bekannt.**

**Aus der** DE 198 46 235 C1 **ist eine Verbindungsanordnung zur Verbindung eines Motors mit einem Getriebe bekannt.**

**Aus der** DE 101 18 562 A1 **ist eine Kupplung zum Verbinden zweier Bauteile bekannt.**

**Aus der** DE 10 2013 011 900 A1 **ist eine Kupplung mit flexiblem Element bekannt.**

Der Erfindung liegt daher die Aufgabe zugrunde, einen Getriebemotor weiterzubilden, wobei auch bei veränderlichen Temperaturen die vom Getriebemotor anzutreibende Last stets gleichartig angetrieben wird.

Erfindungsgemäß wird die Aufgabe bei dem Getriebemotor nach den in Anspruch 1 angegebenen Merkmalen gelöst.

Wichtige Merkmale der Erfindung bei dem Getriebemotor, aufweisend ein Getriebe, einen Elektromotor und einen Adapter, sind, dass der Adapter zwischen dem Elektromotor und dem Getriebe angeordnet ist,
wobei der Adapter eine Adapterwelle aufweist,
wobei die Adapterwelle zumindest teilweise in die eintreibende Welle des Getriebes eingesteckt ist,
wobei die Adapterwelle mittels eines Balgs mit der eintreibenden Welle drehfest verbunden ist,
wobei zwischen der Adapterwelle und der eintreibenden Welle ein Dichtring angeordnet ist.

Von Vorteil ist dabei, dass die eintreibende Welle drehbar gelagert ist im Getriebegehäuse, insbesondere mittels nur eines einzigen Lagers, und der Dichtring Zentrierfunktion für die Zentrierung der eintreibenden Welle zur Adapterwelle hinübernimmt. Eine Motorwelle, insbesondere der Rotor, des Elektromotors ist kraftschlüssig verbunden mit der Adapterwelle. An dem von der Adapterwelle abgewandten Ende der eintreibenden Welle ist ein Sonnenrad einer Planetengetriebestufe des Getriebes anordenbar, wobei das Sonnenrad mit Planetenrädern im Eingriff ist und somit abgestützt ist. Die Adapterwelle wird beim Einstecken in die eintreibende Welle mittels des Dichtrings zentriert. Nach kraftschlüssigem Verbinden der Motorwelle mit der Adapterwelle gleicht der elastische Dichtring Ausrichtungsabweichungen der Wellen aus.

Da die eintreibende Welle hohl ausgeführt ist und keine zusätzliche Dichtungsmaßnahme gegen austretendes Öl bei der Einsteckverbindung des Sonnenrads vorgesehen ist, stellt der Dichtring im Fall des Versagens der Einsteckverbindung bezüglich der Öldichtheit eine zweite Sicherheit dar.

Thermisch bedingte Längenveränderungen der Motorwelle werden vom Balg aufgenommen, der in Umfangsrichtung steifer ist als in axialer Richtung. Wenn also in axialer Richtung der Balg gestaucht oder gestreckt wird, wird trotzdem in Umfangsrichtung vom Motor erzeugtes Drehmoment ungestört übertragen. Selbst wenn also das Sonnenrad und die Planetenräder jeweils eine Schrägverzahnung aufweisen, wirkt sich die Längenveränderung der Motor welle nicht auf die Umfangswinkelposition der abtreibenden Getriebewelle aus, weil die Längenveränderung schon vor Erreichen des Sonnenrads kompensiert ist.

Der Dichtring ist vorzugsweise als O-Ring ausgeführt. Insbesondere ist er aus einem elastischen Material herstellbar, wie beispielsweise Gummi oder ein anderes Elastomer.

Bei einer vorteilhaften Ausgestaltung weist die Adapterwelle an ihrem Außenumfang eine Stufe auf,
wobei die eintreibende Welle eine Stufenbohrung aufweist,
wobei der Dichtring axial zwischen der Stufe und der Stufe der Stufenbohrung angeordnet ist,
insbesondere wobei der Dichtring auf die Adapterwelle aufgesteckt ist,
insbesondere wobei der von dem Dichtring in axialer Richtung, also in Richtung der Drehachse der eintreibenden Welle, überdeckte Bereich in dem von dem Balg in axialer Richtung überdeckten Bereich enthalten ist. Von Vorteil ist dabei, dass die Stufenbohrung und die Stufe am Außenumfang einfach herstellbar sind und somit der Raumbereich zur Aufnahme des Dichtrings in einfacher Weise zur Verfügung stellbar ist. Außerdem ist durch die Dimensionierung der Stufen der Raumbereich derart klein wählbar, dass der Dichtring den Raumbereich fast vollständig ausfüllt.

Bei einer vorteilhaften Ausgestaltung ist die Adapterwelle hohl ausgeführt,
wobei eine Motorwelle, insbesondere Rotor, des Elektromotors in die Adapterwelle zumindest teilweise eingesteckt ist,
wobei ein Klemmring auf die Adapterwelle aufgesteckt ist, insbesondere zur kraftschlüssigen Verbindung der Adapterwelle mit der Motorwelle. Von Vorteil ist dabei, dass eine einfache Verbindung ausführbar ist.

Bei einer vorteilhaften Ausgestaltung ist der Balg schweißverbunden sowohl mit der Adapterwelle als auch mit der eintreibenden Welle,
insbesondere wobei die Adapterwelle einen radial hervorragenden Vorsprung aufweist, an dem der Balg schweißverbunden ist,
insbesondere wobei die eintreibende Welle einen radial hervorragenden Vorsprung aufweist, an dem der Balg schweißverbunden ist. Von Vorteil ist dabei, dass eine stoffschlüssige Verbindung und somit belastbare Verbindung zwischen Balg und Wellen verwendbar ist.

Bei einer vorteilhaften Ausgestaltung ist der Außenring eines Lagers, insbesondere Wälzlagers, insbesondere Kugellagers, in einem Flanschteil, insbesondere Lagerflansch, des Getriebes aufgenommen,
wobei der Innenring des Lagers auf die eintreibende Welle aufgesteckt ist,
wobei der Innenring gegen den an der eintreibenden Welle ausgeformten, radial hervorragenden Vorsprung angestellt und/oder angedrückt ist. Von Vorteil ist dabei, dass die eintreibende Welle am Flanschteil gelagert ist und außerdem die in das erste Ende der eintreibenden Welle eingesteckte Sonnenrad an Planetenrädern abgestützt ist und somit mittels des Dichtrings die Adapterwelle beim Einstecken in die eintreibende Welle zentriert wird. Insbesondere nach dem einstecken und kraftschlüssigen Verbinden der Motorwelle hat der Dichtring dann eine Kupplungsfunktion.

Bei einer vorteilhaften Ausgestaltung ist das Lager vom Balg axial beabstandet. Von Vorteil ist dabei, dass der Dichtring im Bereich des Balgs angeordnet ist und somit ein axialer Abstand zum Lager vorhanden ist. Somit sind Querkräfte besser kompensierbar.

Bei einer vorteilhaften Ausgestaltung umfasst der vom Balg in axialer Richtung überdeckte Bereich den vom Dichtring in axialer Richtung überdeckten Bereich und den von den in axialer Richtung zwischen den beiden Stufen überdeckten Bereich. Von Vorteil ist dabei, dass der Dichtring die Adapterwelle im Bereich des Balgs zentriert. Wichtig ist auch, dass die Längenkompensation in dem in axialer Richtung vom Balg überdeckten Bereich ausgeführt wird. Somit ist das Sonnenrad separiert von Längenveränderungen der Motorwelle und Adapterwelle betreibbar.

Bei einer vorteilhaften Ausgestaltung umfasst der von der Adapterwelle in axialer Richtung überdeckte Bereich den von dem Balg in axialer Richtung überdeckten Bereich. Von Vorteil ist dabei, dass bei Versagen des Dichtrings die Adapterwelle in die eintreibende Welle tief eingesteckt ist, insbesondere axial weiter als der Balg reicht. Somit ist in diesem Fehlerfall die Adapterwelle zumindest in der Stufenbohrung der eintreibenden Welle gehalten.

Bei einer vorteilhaften Ausgestaltung berührt der Dichtring
- die Stufe der Adapterwelle,
- die Stufe der eintreibenden Welle,
- die Wand der Stufenbohrung in der eintreibenden Welle und
- den zylindrischen Umfang der Adapterwelle.

Von Vorteil ist dabei, dass der Dichtring an vier Seiten begrenzt ist und den Raumbereich somit effektiv ausnutzt und gleichzeitig abdichtet. In Umfangsrichtung ist der den Dichtring aufnehmende Raumbereich umlaufend, also ohne Begrenzung ausgeführt.

Erfindungsgemäß berührt der Dichtring
- in axialer Richtung vorne die eintreibende Welle,
- entgegen der axialen Richtung die Adapterwelle,
- nach radial außen gerichtet die eintreibende Welle und
- nach radial innengerichtet die Adapterwelle.

Von Vorteil ist dabei, dass der Dichtring an vier Seiten begrenzt ist und den Raumbereich somit effektiv ausnutzt und gleichzeitig abdichtet. In Umfangsrichtung ist der den Dichtring aufnehmende Raumbereich umlaufend, also ohne Begrenzung ausgeführt.

Bei einer vorteilhaften Ausgestaltung ist ein Gehäuseteil des Adapters mit dem Flanschteil verbunden und mit einem Gehäuseteil des Getriebes,
wobei das Gehäuseteil des Adapters den Klemmring radial umgibt. Von Vorteil ist dabei, dass der Adapter zwischen dem Motor und dem Getriebe angeordnet ist. Somit sind Längenveränderungen zwischen Motor und Getriebe kompensierbar.

Bei einer vorteilhaften Ausgestaltung weist der Klemmring einen axial durchgehenden Schlitz auf,
insbesondere wobei eine Schraube durch den Schlitz durchgeführt ist,
insbesondere wobei die vorzugsweise tangential gerichtet angeordnete Schraube den Klemmring derart zusammendrückt, dass der Schlitz verengt wird. Von Vorteil ist dabei, dass eine einfache kraftschlüssige Verbindung realisiert ist.

Bei einer vorteilhaften Ausgestaltung ist ein als Einsteckritzel ausgeführtes Sonnenrad in die eintreibende Welle auf deren von der Adapterwelle axial abgewandten Seite eingesteckt und drehfest mit der eintreibenden Welle verbunden ist. Von Vorteil ist dabei, dass ein schrägverzahntes Sonnenrad vorsehbar ist und trotzdem thermisch bedingte Längenveränderungen der Motorwelle sich nicht auf die Umfangswinkellage der abtreibenden Welle des Getriebes auswirken.

Zwischen Motorwelle und Adapterwelle ist ein äußerst schmale Spalt vorhanden.

Von Vorteil ist dabei, dass der Dichtring zur Ausrichtung der Adapterwelle relativ zur eintreibenden Welle verwendet wird. Außerdem verhindert der Dichtring ein axiales Anstoßen der Adapterwelle an der eintreibenden Welle.

Die Erfindung wird nun anhand von schematischen Abbildungen näher erläutert:

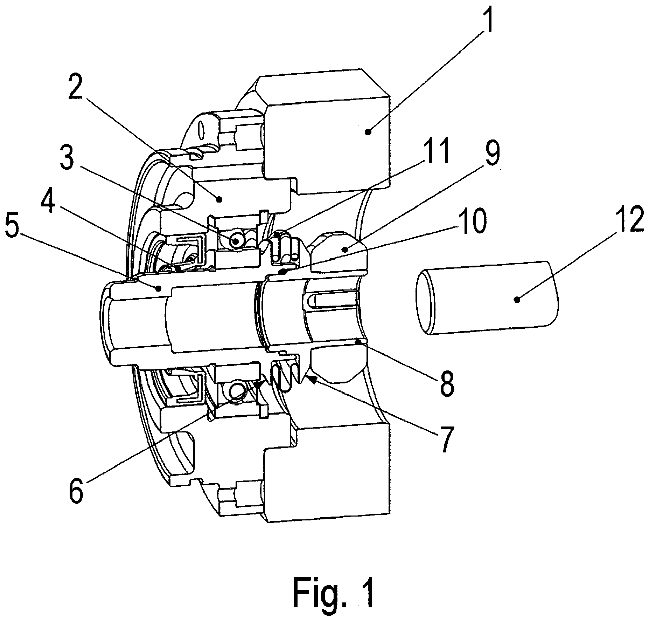

In der Figur 1 ist der eintreibende Bereich eines von einem erfindungsgemäßen Getriebemotor umfassten Getriebes mit Adapter angeschnitten in Schrägansicht dargestellt.

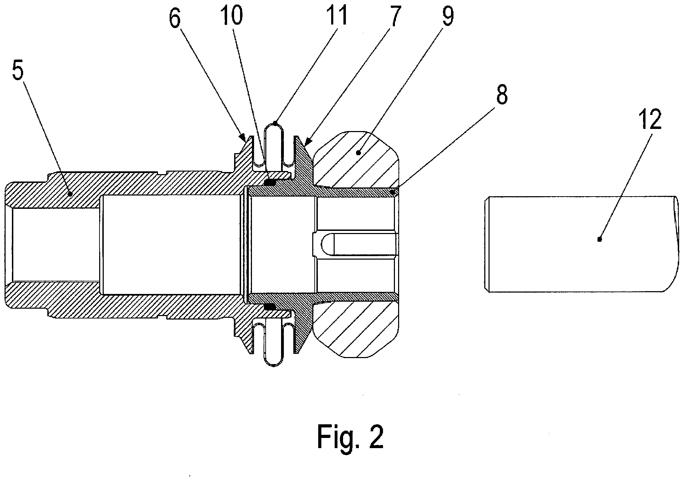

In der Figur 2 ist ein Längsschnitt durch den drehenden Teil der Figur 1 dargestellt.

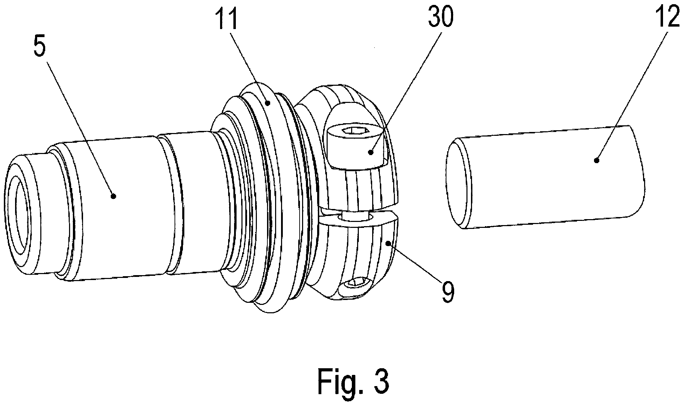

In der Figur 3 ist eine zugehörige Schrägansicht dargestellt.

Wie in den Figuren gezeigt, weist der erfindungsgemäße Getriebemotor einen Adapter auf, welcher zwischen einem Getriebe und einem Elektromotor angeordnet ist.

In den Figuren ist dabei vom Elektromotor nur die Motorwelle 12, insbesondere also der Rotor, des Elektromotors dargestellt. Die Motorwelle 12 ist im Gehäuse des Elektromotors mittels zweier Lager gelagert. Vorzugsweise ist das dem Getriebe zugewandte Lager ein Loslager und das vom Getriebe weiter entfernt angeordnete Lager ein Festlager.

Die Motorwelle 12 ist in eine hohl ausgeführte Adapterwelle 8 des Adapters eingesteckt und kraftschlüssig verbunden. Hierzu ist auf die Adapterwelle 8 ein Klemmring 9 aufgesteckt, welcher mittels Betätigung der tangential ausgerichtet angeordneten Schraube 30 die Adapterwelle auf die eingesteckte Motorwelle 12 aufschrumpft. Hierzu weist die Adapterwelle 5 einen axial gerichteten Schlitz auf.

Die eintreibende Welle 5 ist ebenfalls hohl ausgeführt und mittels eines Balgs 11 drehfest mit der Adapterwelle 8 verbunden. Der Balg 11 ist radial außerhalb der Adapterwelle 8 und auch radial außerhalb der eintreibenden Welle 5 angeordnet. Anders ausgedrückt, ist der von dem Balg 11 überdeckte Radialabstandsbereich radial außerhalb des von der Adapterwelle 8 und von der eintreibenden Welle 5 gemeinsam überdeckten Radialabstandsbereichs in dem vom Balg 11 in axialer Richtung überdeckten Bereich.

Die Adapterwelle 8 ist teilweise eingesteckt in die eintreibende Welle 5 des Getriebes.

Die eintreibende Welle 5 ist mittels eines im Flanschteil 2 aufgenommenen Lagers 3, insbesondere Wälzlagers, insbesondere Kugellagers, drehbar gelagert. Der Innenring des Lagers 3 ist auf die Welle 5 aufgesteckt und der Außenring des Lagers 5 im Flanschteil 2 aufgenommen.

Ein Wellendichtring 4 ist auf der axial vom Balg 11 abgewandten Seite des Lagers 3 im Flanschteil 2 aufgenommen und dichtet zur eintreibenden Welle 5 hin ab.

Der Balg 11 ist in axialer Richtung, insbesondere also in Richtung der Drehachse der Adapterwelle 8, zwischen einem an der Adapterwelle 8 ausgeformten Vorsprung 7 und einem an der eintreibenden Welle 5 ausgeformten Vorsprung 6 angeordnet. Dabei ist der Balg 11 mit seinem ersten axialen Endbereich an dem Vorsprung 7 und mit seinem anderen axialen Endbereich an dem Vorsprung 6 angeschweißt.

Vorzugsweise sind die Verbindungsflächen zwischen Balg 11 und den Vorsprüngen (6, 7) eben ausgeführt, wobei die Normalen der Ebenen jeweils die parallel zur axialen Richtung ausgerichtet sind.

Der von den Vorsprüngen (7, 6) jeweils überdeckte Radialabstandsbereich überlappt mit dem von dem Balg 11 überdeckten Radialabstandsbereich.

In dem von Balg 11 in axialer Richtung überdeckten Bereich weist die Adapterwelle 8 an ihrer radialen Außenseite eine Stufe auf und die eintreibende Welle 5 an ihrer radial gesehenen Innenseite eine Stufe auf.

Die beiden Stufen sind in axialer Richtung voneinander beabstandet, so dass ein Dichtring 10, insbesondere O-Ring, zwischen den Stufen angeordnet ist.

Die jeweilige radiale Ausdehnung der Stufen, insbesondere also der von der jeweiligen Stufe überdeckte Radialabstandsbereich, ist geringer als der Durchmesser des Querschnitts des Dichtrings in seinem entspannten Zustand und/oder als der von dem Dichtring überdeckte Radialabstandsbereich in seinem entspannten Zustand.

Somit wird beim Einschieben der Adapterwelle 8 in die eintreibende Welle 5 die Adapterwelle 8 zur eintreibenden Welle 5 mittels des Dichtrings zentriert. Dies ist wichtig, weil die eintreibende Welle 5 nur den Innenring eines einzigen Lagers aufnimmt.

Thermisch bedingte Längenveränderungen der Motorwelle 12 kompensiert der Balg 11.

An dem von der Motorwelle 12 abgewandten Endbereich der eintreibenden Welle 5 ist ein in den Figuren nicht gezeigtes als Einsteckritzel ausgeführtes Sonnenrad in die hohle Öffnung der Welle 5 eingesteckt und dabei drehfest und auch in axialer Richtung fest verbunden mit der eintreibenden Welle 5.

Vorzugsweise ist das Sonnenrad und auch die mit ihm im Eingriff befindlichen Planetenräder schräg verzahnt, insbesondere so dass bei starrer Kopplung der Adapterwelle 8 mit der eintreibenden Welle 5 die axialen thermisch bedingten Längenveränderungen der Motorwelle 12 über die Schrägverzahnung an der abtreibenden Welle eine Positionierungenauigkeit der abtreibenden Welle bewirken.

Der Dichtring 10 bewirkt schon beim Einstecken der Adapterwelle 8 in die eintreibende Welle 5 eine Zentrierung der Adapterwelle 8 zur eintreibenden Welle 5. Außerdem begrenzt er das Einstecken, indem das weiter Fortsetzen des Einsteckens extrem ansteigende Kräfte erfordert. Durch diesen Kraftanstieg ist also das Einstecken begrenzt und/oder das Ende des Einsteckens erkennbar.

Der den Dichtring 10 aufnehmende Raumbereich ist in axialer Richtung und in radialer Richtung derart klein, dass der Dichtring 10 sowohl die Stufe der Adapterwelle 8 als auch die Stufe der eintreibenden Welle 5 berührt und auch die Wand der Bohrung in der eintreibenden Welle 5 sowie den zylindrischen Umfang der Adapterwelle 8. Der Dichtring 10 berührt also sowohl in axialer Richtung vorne als hinten und radial außen und innen die beiden ihn begrenzenden Wellen (5, 8).

Der in axialer Richtung vom Dichtring 10 überdeckte Bereich ist von dem in axialer Richtung vom Balg 11 überdeckten Bereich umfasst.

Der Balg 11 ist in axialer Richtung beabstandet vom Lager 3, wobei der Innenring des Lagers 3 angedrückt und/oder angestellt ist an den an der eintreibenden Welle 5 ausgeformten Vorsprung 6. An der vom Lager 3 axial abgewandten Seite des Vorsprungs 6 ist der Balg 11 schweißverbunden.

Der Außendurchmesser des Balgs 11 weist in axialer Richtung einen wellenförmigen Verlauf auf. Vorzugsweise ist die Wandstärke des Balgs 11 konstant ausgeführt. Insbesondere ist der Balg 11 aus einem Metallblech hergestellt.

Die Adapterwelle 8 ist axial von dem Lager 3 beabstandet. Der von der Adapterwelle 8 in axialer Richtung überdeckte Bereich ist von dem vom Lager 3 in axialer Richtung überdeckten Bereich beabstandet.

Der von der Adapterwelle 8 in axialer Richtung überdeckte Bereich umfasst den von dem Lager 3 in axialer Richtung überdeckten Bereich.

Der von der eintreibenden Welle 5 in axialer Richtung überdeckte Bereich ist beabstandet von dem vom an der Adapterwelle 8 ausgeformten Vorsprung 7, an welchem der Balg 11 schweißverbunden ist.

Vorzugsweise ist das Lager mit Fett geschmiert.

Der Wellendichtring 4 dichtet den zumindest teilweise mit Öl befüllten Innenraumberiech des Getriebes ab. Somit ist der Balg 11 nicht von Öl umgeben, sondern von Umgebungsluft. Vom Balg 11 zum Innenraum des antreibenden Motors ist keine Dichtung notwendig.

Der Dichtring 10 ist vorzugsweise als O-Ring ausgeführt und fungiert zur Zentrierung der Adapterwelle 8 innerhalb der eintreibenden Welle 5. Außerdem verhindert er ein Fressen zwischen der eintreibenden Welle 5 und der Adapterwelle 8. Der äußerst schmale Spalt zwischen der Adapterwelle 8 und der eintreibenden Welle 5 verhindert oder begrenzt einen Verkippungswinkel. Im Wesentlichen ist somit nur ein relatives Bewegen der Adapterwelle 8 gegen die eintreibende Welle 5 in axialer Richtung ermöglicht.

### Bezugszeichenliste

1 Adaptergehäuseteil
2 Flanschteil
3 Lager, insbesondere Wälzlager, insbesondere Kugellager
4 Wellendichtring
5 eintreibende Welle
6 Vorsprung
7 Vorsprung
8 Adapterwelle
9 Klemmring
10 Dichtring
11 Balg
12 Motorwelle, insbesondere Rotor des das Getriebe antreibenden Elektromotors
30 Schraube

## Patentansprüche

1. Getriebemotor, aufweisend ein Getriebe, einen Elektromotor und einen Adapter,
wobei der Adapter zwischen dem Elektromotor und dem Getriebe angeordnet ist,
wobei der Adapter eine Adapterwelle (8) aufweist,
wobei die Adapterwelle (8) zumindest teilweise in eine eintreibende Welle (5) des Getriebes eingesteckt ist,
wobei die Adapterwelle (8) mittels eines Balgs (11) mit der eintreibenden Welle (5) des Getriebes drehfest verbunden ist,
wobei zwischen der Adapterwelle (8) und der eintreibenden Welle (5) ein Dichtring (10) angeordnet ist,
insbesondere wobei die eintreibende Welle (5) einstückig ausgeführt ist,
insbesondere wobei die Adapterwelle (8) einstückig ausgeführt ist,
**dadurch gekennzeichnet, dass**
**der Dichtring (10)**
- **in axialer Richtung vorne die eintreibende Welle (5),**
- **entgegen der axialen Richtung die Adapterwelle (8),**
- **nach radial außen gerichtet die eintreibende Welle (5) und**
- **nach radial innengerichtet die Adapterwelle (8)**
**berührt.**

2. Getriebemotor nach Anspruch 1,
**dadurch gekennzeichnet, dass**
die Adapterwelle (8) an ihrem Außenumfang eine Stufe aufweist,
wobei die eintreibende Welle (5) eine Stufenbohrung aufweist,
wobei der Dichtring (10) axial zwischen der Stufe der Adapterwelle (8) und der Stufe der Stufenbohrung angeordnet ist,
insbesondere wobei der Dichtring (10) auf die Adapterwelle (8) aufgesteckt ist,
insbesondere wobei der von dem Dichtring (10) in axialer Richtung, also in Richtung der Drehachse der eintreibenden Welle (5), überdeckte Bereich in dem von dem Balg (11) in axialer Richtung überdeckten Bereich enthalten ist.

3. Getriebemotor nach einem der vorangegangenen Ansprüche,
**dadurch gekennzeichnet, dass**
die Adapterwelle (8) hohl ausgeführt ist,
wobei eine Motorwelle (12) des Elektromotors in die Adapterwelle (8) zumindest teilweise eingesteckt ist,
wobei ein Klemmring (9) auf die Adapterwelle (8) aufgesteckt ist, insbesondere zur kraftschlüssigen Verbindung der Adapterwelle (8) mit der Motorwelle (12).

4. Getriebemotor nach einem der vorangegangenen Ansprüche,
**dadurch gekennzeichnet, dass**
der Balg (11) schweißverbunden ist sowohl mit der Adapterwelle (8) als auch mit der eintreibenden Welle (5),
insbesondere wobei die Adapterwelle (8) einen radial hervorragenden Vorsprung (7) aufweist, an dem der Balg (11) schweißverbunden ist,
insbesondere wobei die eintreibende Welle (5) einen radial hervorragenden Vorsprung (6) aufweist, an dem der Balg (11) schweißverbunden ist.

5. Getriebemotor nach Anspruch 4,
**dadurch gekennzeichnet, dass**
der Außenring eines Lagers (3), insbesondere Wälzlagers, insbesondere Kugellagers, in einem Flanschteil (2) des Getriebes aufgenommen ist,
wobei der Innenring des Lagers (3) auf die eintreibende Welle (5) aufgesteckt ist,
wobei der Innenring gegen den an der eintreibenden Welle (5) ausgeformten, radial hervorragenden Vorsprung (6) angestellt und/oder angedrückt ist
insbesondere wobei ein im Flanschteil (2) aufgenommener Wellendichtring (4) zur eintreibenden Welle (5) hin abdichtet, insbesondere wobei eine Dichtlippe des Wellendichtrings (4) die eintreibende Welle (5) berührt,
insbesondere wobei der Wellendichtring (4) auf der vom Balg (11) abgewandten Seite des Lagers (3) angeordnet ist.

6. Getriebemotor nach einem der Ansprüche 4 oder 5, **dadurch gekennzeichnet, dass**
das Lager (3) vom Balg (11) axial beabstandet ist,
insbesondere wobei das Lager (3) fettgeschmiert ist.

7. Getriebemotor nach einem der Ansprüche 2 bis 6, **dadurch gekennzeichnet, dass**
der vom Balg (11) in axialer Richtung überdeckte Bereich den vom Dichtring (10) in axialer Richtung überdeckten Bereich umfasst und den von den in axialer Richtung zwischen den beiden Stufen überdeckten Bereich umfasst,
und/oder dass
der vom Balg (11) überdeckte Radialabstandsbereich beabstandet ist von dem vom Dichtring (10) überdeckten Radialabstandsbereich,
insbesondere wobei der der Radialabstandsbereich bezogen ist auf die Drehachse der eintreibenden Welle (5).

8. Getriebemotor nach einem der vorangegangenen Ansprüche,
**dadurch gekennzeichnet, dass**
der von der Adapterwelle (8) in axialer Richtung überdeckte Bereich den von dem Balg (11) in axialer Richtung überdeckten Bereich umfasst.

9. Getriebemotor nach einem der Ansprüche 2 bis 8, **dadurch gekennzeichnet, dass** der Dichtring (10)
- die Stufe der Adapterwelle (8),
- die Stufe der eintreibenden Welle (5),
- die Wand der Stufenbohrung in der eintreibenden Welle (5) und
- den zylindrischen Umfang der Adapterwelle (8) berührt.

10. Getriebemotor nach einem der Ansprüche 5 bis 9, **dadurch gekennzeichnet, dass** ein Gehäuseteil (1) des Adapters (8) mit dem Flanschteil (2) verbunden ist und mit einem Gehäuseteil des Getriebes, wobei das Gehäuseteil (1) des Adapters (8) den Klemmring (9) radial umgibt.

11. Getriebemotor nach einem der Ansprüche 3 bis 10, **dadurch gekennzeichnet, dass**
der Klemmring (9) einen axial durchgehenden Schlitz aufweist,
insbesondere wobei eine Schraube (30) durch den Schlitz durchgeführt ist,
insbesondere wobei die vorzugsweise tangential gerichtet angeordnete Schraube (30) den Klemmring (9) derart zusammendrückt, dass der Schlitz verengt wird.

12. Getriebemotor nach einem der vorangegangenen Ansprüche,
**dadurch gekennzeichnet, dass**
ein als Einsteckritzel ausgeführtes Sonnenrad in die eintreibende Welle (5) auf deren von der Adapterwelle (8) axial abgewandten Seite eingesteckt und drehfest mit der eintreibenden Welle (5) verbunden ist,
wobei die eintreibende Welle (5) als Hohlwelle ausgeführt ist und mittels des als Einsteckritzel ausgeführten Sonnenrads zum mit Öl zumindest teilweise befüllten Innenraum des Getriebes hin abgedichtet ist.

13. Getriebemotor nach Anspruch 12, **dadurch gekennzeichnet, dass**
das Sonnenrad mit Umlaufrädern, insbesondere Planetenrädern, im Eingriff ist,
wobei das Sonnenrad eine Schrägverzahnung aufweist, welche im Eingriff ist mit Schrägverzahnungen der Umlaufräder,
und/oder dass
der Dichtring (10) ein O-Ring ist
und/oder dass
der Dichtring (10) aus einem Elastomer gefertigt ist, insbesondere aus Gummi.

## Claims

1. A geared motor, having a gear unit, an electric motor and an adapter, wherein the adapter is arranged between the electric motor and the gear unit,
wherein the adapter has an adapter shaft (8),
wherein
the adapter shaft (8) is at least partially inserted into an input shaft (5) of the gear unit, wherein the adapter shaft (8) is connected non-rotatably to the input shaft (5) of the gear unit by means of a bellows (11),
wherein a sealing ring (10) is arranged between the adapter shaft (8) and the input shaft (5),
in particular wherein the input shaft (5) is embodied in one piece,
in particular wherein the adapter shaft (8) is embodied in one piece,
**characterised in that**
the sealing ring (10) contacts
- in the axial direction at the front, the input shaft (5),
- counter to the axial direction, the adapter shaft (8),
- directed radially outwards, the input shaft (5), and
- directed radially inwards, the adapter shaft (8).

2. A geared motor according to claim 1,
**characterised in that**
the adapter shaft (8) has a step on its outer periphery,
the input shaft (5) having a stepped bore,
the sealing ring (10) being arranged axially between the step of the adapter shaft (8) and the step of the stepped bore,
in particular with the sealing ring (10) being mounted on the adapter shaft (8),
in particular with the region covered by the sealing ring (10) in the axial direction, i.e. in the direction of the axis of rotation of the input shaft (5), being contained in the region covered by the bellows (11) in the axial direction.

3. A geared motor according to one of the preceding claims,
**characterised in that**
the adapter shaft (8) is made hollow,
with a motor shaft (12) of the electric motor being at least partially inserted into the adapter shaft (8),
with a clamping ring (9) being mounted on the adapter shaft (8), in particular for force-fitting connection of the adapter shaft (8) to the motor shaft (12).

4. A geared motor according to one of the preceding claims,
**characterised in that**
the bellows (11) is connected by welding both to the adapter shaft (8) and to the input shaft (5),
in particular with the adapter shaft (8) having a radially protruding projection (7) to which the bellows (11) is connected by welding,
in particular with the input shaft (5) having a radially protruding projection (6) to which the bellows (11) is connected by welding.

5. A geared motor according to claim 4,
**characterised in that**
the outer ring of a bearing (3), in particular rolling bearing, in particular ball bearing, is accommodated in a flange part (2) of the gear unit,
the inner ring of the bearing (3) being mounted on the input shaft (5),
the inner ring being adjusted and/or pressed against the radially protruding projection (6) formed on the input shaft (5),
in particular with a shaft sealing ring (4) accommodated in the flange part (2) sealing off towards the input shaft (5), in particular with a sealing lip of the shaft sealing ring (4) contacting the input shaft (5),
in particular with the shaft sealing ring (4) being arranged on that side of the bearing (3) which faces away from the bellows (11).

6. A geared motor according to one of claims 4 or 5,
**characterised in that**
the bearing (3) is axially spaced apart from the bellows (11),
in particular with the bearing (3) being grease-lubricated.

7. A geared motor according to one of claims 2 to 6,
**characterised in that**
the region covered by the bellows (11) in the axial direction encompasses the region covered by the sealing ring (10) in the axial direction and encompasses the region covered by the in the axial direction between the two steps,
and/or **in that**
the radial distance region covered by the bellows (11) is spaced apart from the radial distance region covered by the sealing ring (10),
in particular with the [the] radial distance region being related to the axis of rotation of the input shaft (5).

8. A geared motor according to one of the preceding claims,
**characterised in that**
the region covered by the adapter shaft (8) in the axial direction encompasses the region covered by the bellows (11) in the axial direction.

9. A geared motor according to one of claims 2 to 8,
**characterised in that**
the sealing ring (10) contacts
- the step of the adapter shaft (8),
- the step of the input shaft (5),
- the wall of the stepped bore in the input shaft (5), and
- the cylindrical periphery of the adapter shaft (8).

10. A geared motor according to one of claims 5 to 9,
**characterised in that**
a housing part (1) of the adapter (8) is connected to the flange part (2) and to a housing part of the gear unit,
with the housing part (1) of the adapter (8) radially surrounding the clamping ring (9).

11. A geared motor according to one of claims 3 to 10,
**characterised in that**
the clamping ring (9) has an axially uninterrupted slot,
in particular with a screw (30) being passed through the slot,
in particular with the screw (30) which is preferably arranged in a tangentially directed manner compressing the clamping ring (9) in such a way that the slot is constricted.

12. A geared motor according to one of the preceding claims,
**characterised in that**
a sun gear embodied as a plug-in pinion is inserted into the input shaft (5) on that side thereof which faces axially away from the adapter shaft (8), and is connected non-rotatably to the input shaft (5),
with the input shaft (5) being embodied as a hollow shaft and by means of the sun gear which is embodied as a plug-in pinion being sealed off towards the interior of the gear unit which is at least partially filled with oil.

13. A geared motor according to claim 12,
**characterised in that**
the sun gear is engaged with epicyclic wheels, in particular planet wheels,
the sun gear having helical gearing which is engaged with sets of helical gearing of the epicyclic wheels,
and/or **in that**
the sealing ring (10) is an O-ring
and/or **in that**
the sealing ring (10) is manufactured from an elastomer, in particular from rubber.

## Revendications

1. Moto-réducteur comprenant une transmission, un moteur électrique et un adaptateur, l'adaptateur étant agencé entre le moteur électrique et la transmission, l'adaptateur comprenant un arbre d'adaptateur (8),
l'arbre d'adaptateur (8) étant inséré au moins partiellement dans un arbre d'entraînement (5) de la transmission,
l'arbre d'adaptateur (8) étant relié de manière solidaire en rotation à l'arbre (5) de la transmission au moyen d'un soufflet (11),
dans lequel une bague d'étanchéité (10) est agencée entre l'arbre d'adaptateur (8) et l'arbre d'entraînement (5),
en particulier, l'arbre d'entraînement (5) étant conçu d'un seul tenant,
en particulier l'arbre d'adaptateur (8) étant conçu d'un seul tenant,
**caractérisé en ce que**
la bague d'étanchéité (10) vient en contact
- dans la direction axiale à l'avant de l'arbre d'entraînement (5),
- à l'encontre de la direction axiale de l'arbre d'adaptateur (8),
- en étant orientée radialement vers l'extérieur de l'arbre d'entraînement (5)
- en étant orientée radialement vers l'intérieur de l'arbre d'adaptateur (8).

2. Moto-réducteur selon la revendication 1,
**caractérisé en ce que**
l'arbre d'adaptateur (8) présente un étage sur sa périphérie extérieure,
l'arbre d'entraînement (5) présentant un alésage étagé,
la bague d'étanchéité (10) est agencée axialement entre l'étage de l'arbre d'adaptateur (8) et l'étage de l'alésage étagé,
en particulier dans lequel la bague d'étanchéité (10) est enfichée sur l'arbre d'adaptateur (8), en particulier dans lequel la zone recouverte par la bague d'étanchéité (10) dans la direction axiale, c'est-à-dire dans la direction de l'axe de rotation de l'arbre d'entraînement (5), est contenue dans la zone recouverte par le soufflet (11) dans la direction axiale.

3. Moto-réducteur selon l'une quelconque des revendications précédentes,
**caractérisé en ce que**
l'arbre d'adaptateur (8) est conçu creux,
un arbre de moteur (12) du moteur électrique est au moins partiellement inséré dans l'arbre d'adaptateur (8),
une bague de serrage (9) est enfichée sur l'arbre d'adaptateur (8), en particulier pour la connexion par liaison de force de l'arbre d'adaptateur (8) avec l'arbre de moteur (12).

4. Moto-réducteur selon l'une quelconque des revendications précédentes,
**caractérisé en ce que**
le soufflet (11) est soudé à la fois à l'arbre d'adaptateur (8) et à l'arbre d'entraînement (5),
en particulier, l'arbre d'adaptateur (8) présente une saillie (7) faisant saillie radialement sur laquelle le soufflet (11) est soudé, en particulier dans lequel l'arbre d'entraînement (5) présente une saillie (6) faisant saillie radialement sur laquelle le soufflet (11) est soudé.

5. Moto-réducteur selon la revendication 4,
**caractérisé en ce que**
la bague extérieure d'un palier (3), en particulier un palier à roulement, en particulier un roulement à billes, est logée dans une partie de bride (2) de la transmission,
la bague intérieure du palier (3) est enfichée sur l'arbre d'entraînement (5), la bague intérieure étant ajustée et/ou pressée contre la saillie (6) faisant saillie radialement formée sur l'arbre d'entraînement (5), en particulier une bague d'étanchéité d'arbre (4) logée dans la partie de bride (2) assure l'étanchéité par rapport à l'arbre d'entraînement (5), en particulier dans lequel une lèvre d'étanchéité de la bague d'étanchéité d'arbre (4) vient en contact avec l'arbre d'entraînement (5),
en particulier, la bague d'étanchéité d'arbre (4) est agencée du côté du palier (3) opposé au soufflet (11).

6. Moto-réducteur selon l'une quelconque des revendications 4 ou 5,
**caractérisé en ce que**
le palier (3) est espacé axialement du soufflet (11),
en particulier le palier (3) étant lubrifié à la graisse.

7. Moto-réducteur selon l'une quelconque des revendications 2 à 6,
**caractérisé en ce que**
la zone recouverte par le soufflet (11) dans la direction axiale comprend la zone recouverte par la bague d'étanchéité (10) dans la direction axiale et comprend la zone recouverte dans la direction axiale entre les deux étages,
et/ou **en ce que**
la zone de distance radiale recouverte par le soufflet (11) est espacée de la zone de distance radiale recouverte par la bague d'étanchéité (10),
en particulier, la zone de distance radiale étant liée à l'axe de rotation de l'arbre d'entraînement (5).

8. Moto-réducteur selon l'une quelconque des revendications précédentes,
**caractérisé en ce que**
la zone recouverte par l'arbre d'adaptateur (8) dans la direction axiale comprend la zone recouverte par le soufflet (11) dans la direction axiale.

9. Motoréducteur selon l'une quelconque des revendications 2 à 8,
**caractérisé en ce que** la bague d'étanchéité (10) vient en contact avec
- l'étage de l'arbre d'adaptateur (8),
- l'étage de l'arbre d'entraînement (5),
- la paroi de l'alésage étagé dans l'arbre d'entraînement (5), et
- la périphérie cylindrique de l'arbre d'adaptateur (8).

10. Moto-réducteur selon l'une quelconque des revendications 5 à 9,
**caractérisé en ce que**
une partie de boîtier (1) de l'adaptateur (8) est reliée à la partie de bride (2) et à une partie de boîtier de la transmission,
la partie de boîtier (1) de l'adaptateur (8) entourant radialement la bague de serrage (9).

11. Moto-réducteur selon l'une quelconque des revendications 3 à 10,
**caractérisé en ce que**
la bague de serrage (9) présente une fente continue axiale,
en particulier avec une vis (30) passant à travers la fente,
en particulier, la vis (30) agencée de préférence tangentiellement comprimant la bague de serrage (9) de sorte que la fente soit rétrécie.

12. Moto-réducteur selon l'une quelconque des revendications précédentes,
**caractérisé en ce que**
une roue solaire conçue comme un pignon enfichable est insérée dans l'arbre d'entraînement (5) sur son côté opposé axialement à l'arbre d'adaptateur (8) et est reliée de manière solidaire en rotation à l'arbre d'entraînement (5),
l'arbre d'entraînement (5) est conçu sous la forme d'un arbre creux et est scellé au moyen de la roue solaire conçue sous la forme d'un pignon d'insertion vers l'intérieur de la transmission au moins partiellement rempli d'huile.

13. Moto-réducteur selon la revendication 12,
**caractérisé en ce que**
la roue solaire est en prise avec des roues de rotation, en particulier des roues planétaires,
la roue solaire présente une denture hélicoïdale qui est en prise avec des dentures hélicoïdales des roues de rotation,
et/ou **en ce que**
la bague d'étanchéité (10) est un joint torique
et/ou **en ce que**
la bague d'étanchéité (10) est fabriquée à partir d'un élastomère, en particulier de caoutchouc.
